# EUROPÄISCHE PATENTSCHRIFT

(11) **EP 1 163 975 B1**
(45) Veröffentlichungstag und Bekanntmachung des Hinweises auf die Patenterteilung: **04.08.2004**
(21) Anmeldenummer: 01113961.5
(22) Anmeldetag: 08.06.2001
(51) Int. Cl.: B23Q 3/18, F16M 7/00

(54) **Nivelliervorrichtung**
Levelling device
Dispositif de nivellement

(30) Priorität: 13.06.2000 DE 10028393
(43) Veröffentlichungstag der Anmeldung: 19.12.2001
(73) Patentinhaber: System 3R International AB, 162 50 Vällingby (SE)
(72) Erfinder: Nordquist, Hakon, S-187 75 Täby (SE)
(74) Vertreter: Zinngrebe, Horst, Dr.rer.nat.

(56) Entgegenhaltungen:
- DE-A- 4 420 807
- US-A- 5 769 561
- PATENT ABSTRACTS OF JAPAN vol. 2000, no. 04, 31. August 2000 (2000-08-31) & JP 2000 028085 A (ORII CORP), 25. Januar 2000 (2000-01-25)

## Beschreibung

Die Erfindung betrifft eine Nivelliervorrichtung mit einem Unterteil und einem relativ zum Unterteil einstellbaren und am Unterteil befestigten Oberteil, wobei das Unterteil mit Referenzelementen zur eindeutigen Positionierung und das Oberteil mit Mitteln zum Befestigen eines Werkstückträgers für ein von einer Werkzeugmaschine, insbesondere einer Drahterosionsmaschine, zu bearbeitendes Werkstück versehen sind.

Eine derartige Nivelliervorrichtung ist in dem Dokument US-A-5,769,561 beschrieben. Als Werkstückträger kommt dabei hauptsächlich ein Schraubstock etwa gemäß Dokument EP-B-196 544 in Betracht, welcher ein vom Erodierdraht zu bearbeitendes Werkstück präzise zu halten gestattet.

Moderne Drahterodiermaschinen schneiden genauer und effizienter als ältere Maschinen dieses Typs. Dies wird erreicht durch höhere Stromstärken, verbesserte Steuerung des Stromflusses und verbessertes Beseitigen des Abbrandes durch erhöhten Spülflüssigkeitsdruck. Die Düse, aus der die Spülflüssigkeit mit hohem Druck austritt, befindet sich bei den genannten Maschinen in unmittelbarer Nähe des zu bearbeitenden Werkstückes. Der Spülflüssigkeitsdruck ist nicht konstant sondern zeigt kurzzeitige Schwankungen, die für den raschen Abtransport des Abbrandes zwar kaum, für die exakte Positionierung des Werkstückes allerdings von großer Bedeutung sind. Das Werkstück wird zu Schwingungen angeregt, die sich mit der eingangs erwähnten Nivelliervorrichtung nur schwer unterdrücken lassen und zu Positionsfehlern des Werkstückes und Einbußen an Schnittgenauigkeit führen.

Der Erfindung liegt daher die Aufgabe zugrunde, Maßnahmen vorzusehen, die die Festigkeit und Starrheit der Werkstückpositionierung am Schneidedraht auch bei Schwankungen des Spülflüssigkeitsdruckes gewährleisten.

Bei der eingangs genannten Nivelliervorrichtung sieht die Erfindung dazu vor, daß die Unterseite des Oberteils eine erste Balkenstruktur und die Oberseite des Unterteils eine zweite Balkenstruktur derart aufweisen, daß sich Balken der ersten Balkenstruktur zwischen Balken der zweiten Balkenstruktur erstrecken. Mit der Erfindung wird es möglich, die Starrheit und Festigkeit der Nivelliervorrichtung wesentlich zu verbessern, ohne daß die Stärke des Oberteils und die des Unterteils entsprechend erhöht werden muß. Würde man die Starrheit und Festigkeit der Nivelliervorrichtung einfach durch Vergößern der Stärke des Oberteils und des Unterteils erhöhen wollen, wäre es angesichts der beengten Platzverhältnisse bei Drahterosiermaschinen nicht mehr möglich, das Werkstück möglichst nahe am Schneidedrahtaustritt zu positionieren, was andererseits für die Erzielung einer hohen Schneidgenauigkeit erwünscht ist.

In bevorzugter Ausgestaltung der Erfindung sind die Balken der ersten Balkenstruktur, zwischen die sich Balken der zweiten Balkenstruktur erstrecken, geradlinig und parallel. Sie sollten zweckmäßig in Richtung auf die Mittel weisen, an denen der Werkstückträger zu befestigen ist. Besonders steife Strukturen erhält man, wenn in Weiterführung der Erfindung die Höhe jedes Balkens der ersten Balkenstruktur wenigstens ein Drittel seiner Breite beträgt. Zweckmäßig sind die Balken der ersetn Balkenstruktur, zwischen die sich Balken der zweiten Balkenstruktur erstrecken, durch Querbalken verbunden, sodaß sich eine Art Balkengitterwerk wenigstens am Oberteil ergibt.

Wenn die Mittel zum Befestigen des Werstückträgers einen an eine Kante des Oberteils angeformten Ansatz aufweisen, empfiehlt es sich, den Ansatz durch Versteifungsriegel mit der Unterseite des Oberteils zu verbinden, woraus eine erhöhte Starrheit und Festigkeit des Ansatzes resultieren. Zweckmäßig erstrecken sich die Versteifungsriegel in Zwischenräume zwischen Balken der ersten Balkenstruktur. In Ansehung der räumlichen Verhältnisse bei Drahterodiermaschinen ist es zweckmäßig, den Ansatz sich neben das Unterteil erstrecken zu lassen, wobei dann die Versteifungsriegel nach vorne und unten weisen. Die zweite Balkenstruktur kann vorteilhafterweise Zwischenbalken aufweisen, die vorne mit jeweils einer Rampe in Anpassung an die Abwärtsneigung der Versteifungsriegel versehen sind. Die Starrheit und Festigkeit des Unterteils wird weiter verbessert, wenn in Weiterbildung der Erfindung die zweite Balkenstruktur zwei gegenüberliegende, zweckmäßig parallele Seitenbalken aufweist, die sich neben dem Oberteil erstrecken und die mit Vorteil quer zur Kante des Oberteils verlaufen. Schließlich ist zweckmäßig, die Zwischenräume zwischen den Balken der ersten Balkenstruktur, zwischen die sich Balken der zweiten Balkenstruktur erstrecken, gleich breit wie die sie seitlich begrenzenden Balken zu machen.

Die Starrheit und Festigkeit der Werkstückpositionierung wird erfindungsgemäß auch dadurch verbessert, daß eine erste Stellschraube für eine Auf/Abverstellung des Oberteils relativ zum Unterteil von der Kante am weitesten entfernt angeordnet ist und die Achse für die Auf/Abverstellung in der Nähe der und parallel zur Kante liegt. Damit rückt das Werkstück so nahe wie möglich an den Schwenkpunkt der Auf/Abverstellung des Oberteils heran, sodaß der eventuell schwingungsfähige Arm der Werkstückpositionierung minimal wird. Es empfiehlt sich, die Achse zur. Auf/Abverstellung durch eine parallel zur Kante sich erstreckende Verbindungslinie eines Bolzens, der ein eine Vorspannung zwischen Oberteil und Unterteil erzeugendes Federpaket aufweist, mit einer zweiten Stellschraube zu definieren, deren Verdrehen ein Verkippen des Oberteils relativ zum Unterteil bewirkt. In konstruktiver Ausgestaltung dieses Prinzips sind an der Kante ein Paar kreuzweise angeordnete Rippen vorgesehen, deren eine am Unterteil und deren andere am Oberteil ausgebildet sind. In der Kreuzung der beiden Rippen liegt der Schwenkpunkt, um den das Oberteil relativ zum Unterteil sowohl auf/ab wie auch links/rechts verkippt werden kann. In weiterer bevorzugter Ausgestaltung der Erfindung kann das Oberteil mit dem Unterteil über eine T-förmige Blattfeder verbunden sein, wobei ein von der Kante entfernter Querschenkel der Blattfeder mit dem Unterteil und ein auf die Kante zuweisender Längsschenkel der Blattfeder an einem Mittelbalken der ersten Balkenstruktur befestigt sind. Das kantennahe Ende der Blattfeder erstreckt sich zweckmäßig zwischen die genannten Rippen, sodaß die Rippe des Oberteils auf der Blattfeder aufliegt und die Blattfeder auf der Rippe des Unterteils liegt. Als weitere Stabilitätsmaßnahme empfiehlt sich die Beschichtung von Freiflächen an der Nivelliervorrichtung mit schwingungsdämmender Masse.

Im übrigen sind bevorzugte Ausführungsformen der Erfindung in den Unteransprüchen angegeben. Die Erfindung wird nachstehend anhand der in der beigefügten Zeichnung dargestellten Ausführungsbeispiele im einzelnen beschrieben. Es zeigen:
- Figur 1: eine Ansicht einer Nivelliervorrichtung von schräg oben;
- Figur 2: eine Draufsicht auf die Vorrichtung nach Figur 1;
- Figur 3: einen Vertikalschnitt durch die Vorrichtung nach Figur 1 längs der Linie A-A aus Figur 2;
- Figur 4: einen Vertikalschnitt in vergrößertem Maßstab durch einen Teil der Vorrichtung nach Figur 1 längs der Linie B-B aus Figur 2;
- Figur 5: eine Draufsicht auf eine Blattfeder aus der Vorrichtung nach Figur 1;
- Figur 6: eine Ansicht des Oberteils aus der Vorrichtung nach Figur 1 von schräg unten;
- Figur 7: eine Ansicht des Oberteils nach Figur 6 von unten;

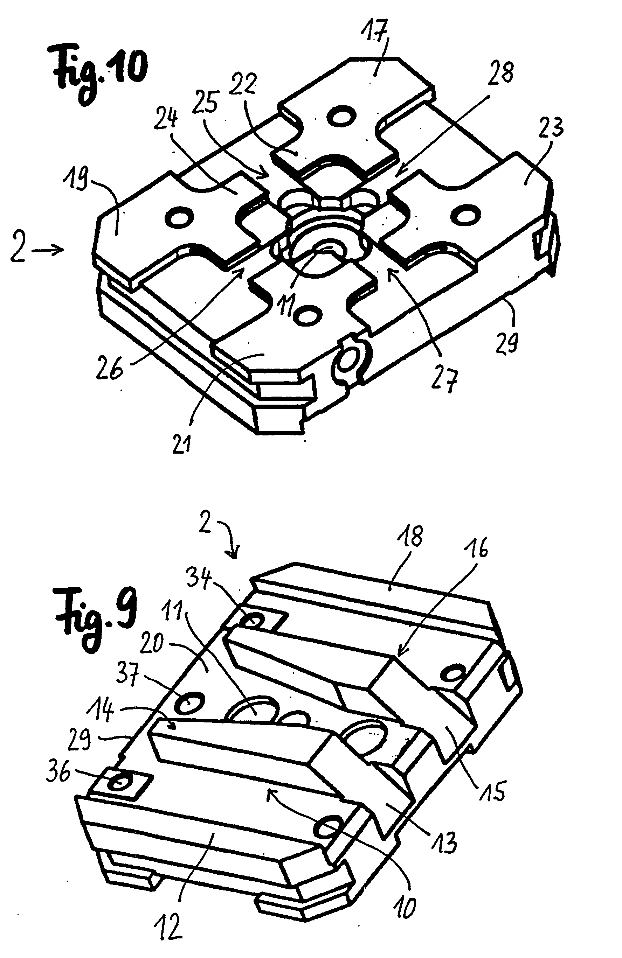

- Figur 8: eine Ansicht eines Vertikalschnittes längs der Linie C-C durch das Oberteil gemäß Figur 7;
- Figur 9: eine Ansicht des Unterteils aus der Vorrichtung nach Figur 1 von schräg oben;
- Figur 10: eine Ansicht des Unterteils nach Figur 9 von schräg unten;
- Figur 11: einen der Figur 4 ähnlichen Vertikalschnitt, und
- Figur 12: einen Ausschnitt aus Figur 11 in vergrößertem Maßstab.

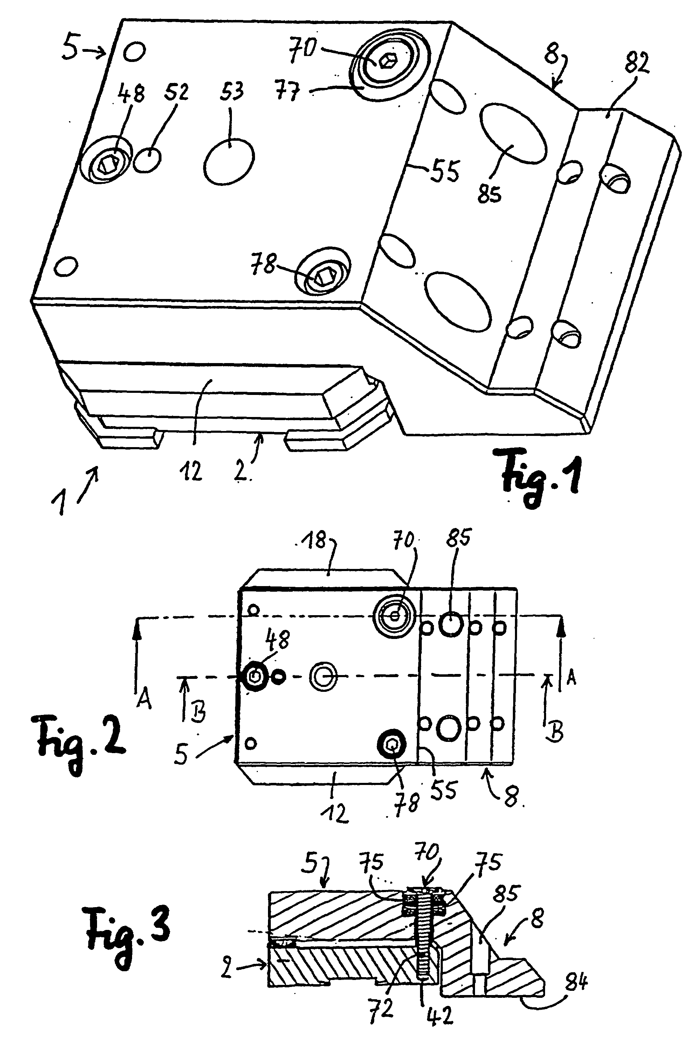

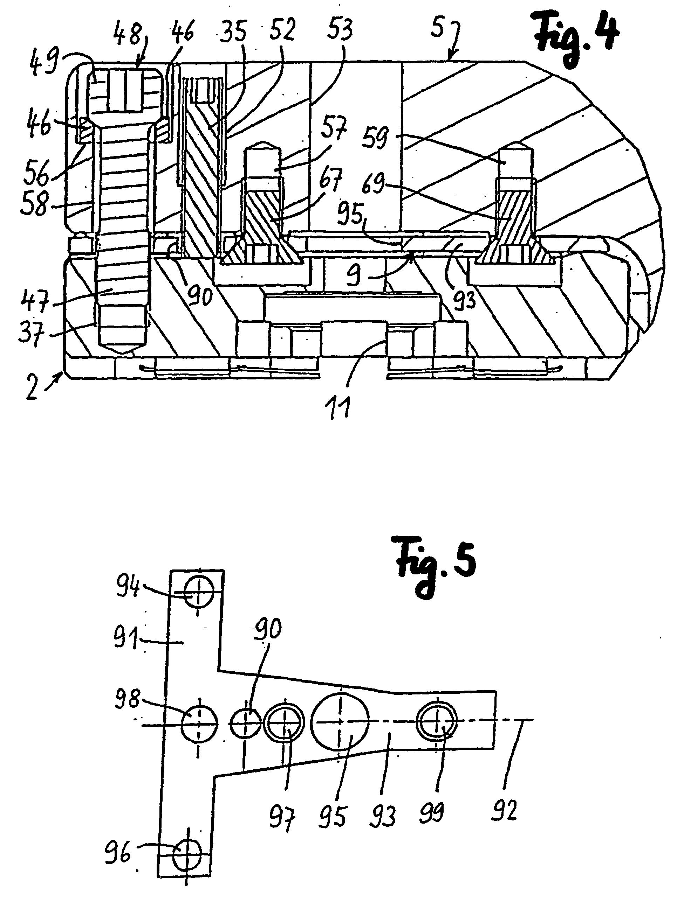

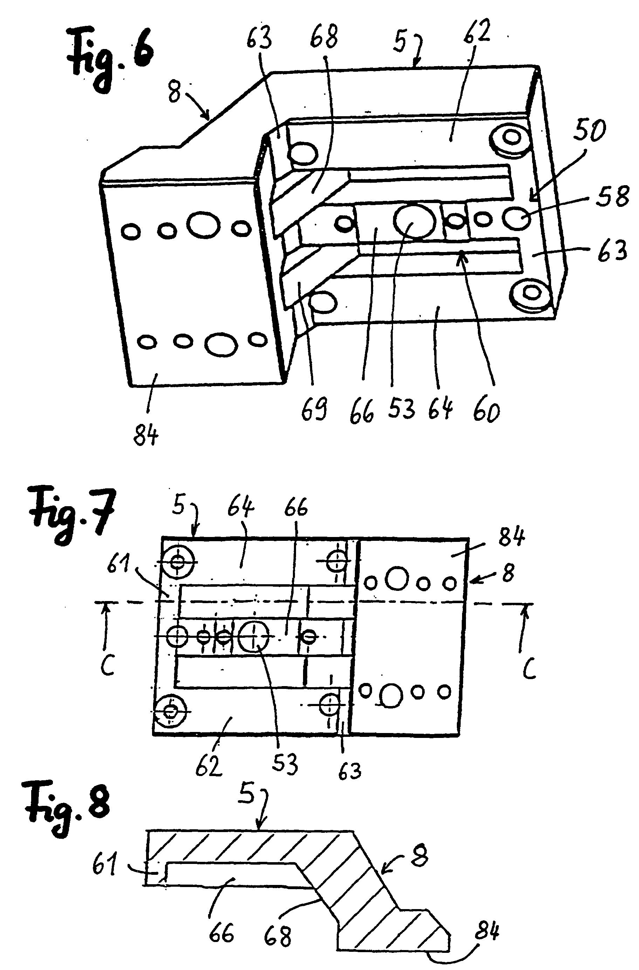

Die Nivelliervorrichtung 1 besteht aus einem Unterteil 2, einem mit dem Unterteil 2 verschraubten Oberteil 5 und einer zwischen Unterteil 2 und Oberteil 5 eingefügten Blattfeder 9, wie man aus den Figuren 1, 4 und 5 erkennt. An das einteilige aus Stahl gefertigte Oberteil 5 ist an seiner vorderen Kante 55 ein Ansatz 8 angeformt, der sich nach vorne neben das Unterteil 2 erstreckt und eine nach vorne und unten abgestufte Oberfläche 82 besitzt. Der Ansatz 8 ist mit zwei parallel zur Kante 55 beabstandeten Reihen von Durchgangslöchern 85 versehen, sodaß ein Werkstückhalter beispielsweise in Form eines Schraubstockes gemäß EP-B-196 544 an der planen Unterfläche 84 des Ansatzes 8 befestigt werden kann.

Die Blattfeder 9 hat die Form eines T mit einem Querschenkel 91 und einem mittigen Längsschenkel 93, der am Übergang zum Querschenkel 91 symmetrisch zu seiner Längsachse 92 verbreitert ist. An den Enden des Querschenkels 91 befinden sich symmetrisch zur Längsachse 92 gesetzte Durchgangslöcher 94, 96, durch die sich nicht dargestellte Schrauben erstrecken, welche in Gewindebohrungen 34, 36 in der Oberseite 20 des Unterteils 2 eingreifen (Figur 9) und den Querschenkel 91 der Blattfeder 9 am Unterteil 2 festlegen. Auf der Längsachse 92 des Längsschenkels 93 sind beiderseits eines großen Zentralloches 95 je ein weiteres Loch 97, 99 vorgesehen. In Gewindesacklöcher 57, 59, die von der Unterseite 50 des Oberteils 5 ausgehen, greifen Schrauben 67, 69 ein, welche die Löcher 97 und 99 durchsetzen und den Längsschenkel 93 am Oberteil 5 festlegen.

Auf der Längsachse 92 befindet sich mittig im Querschenkel 91 ein weiteres Loch 98, welches eine erste Stellschraube 48 mit Spiel durchsetzt. Die erste Stellschraube 48 greift mit ihrem Außengewindeschaft 47 in ein Gewindesackloch 37 ein, welches sich von der Oberseite 20 des Unterteils 2 in dieses erstreckt. Zur Aufnahme der ersten Stellschraube 48 besitzt das Oberteil 5 eine Durchgangsbohrung 58, die unter Ausbildung einer Ringschulter 56 zur Oberseite des Oberteils 5 hin radial erweitert ist. Auf der Ringschulter 56 sitzt ein den verbreiterten Kopf 49 der Stellschraube 48 unterfassender Hartmetallring 46.

Zwischen den Löchern 97 und 98 befindet sich auf dem Querschenkel 93 ein weiteres Loch 90, durch welches sich eine Konterschraube 35 frei erstrecken kann. Die Konterschraube 35 ist in eine mit Innengewinde versehene Durchgangsbohrung 52 des Oberteils 5 eingedreht und liegt stumpf gegen die Oberseite 20 des Unterteils 2 an.

Auf einer nicht dargestellten, zur Längsachse 92 quer liegenden Achse sind in jeweils gleichem Abstand zur Längsachse 92 auf einer Seite derselben in der Nähe der Vorderkante 55 des Oberteils 5 ein Bolzen 70 und auf der anderen Seite der Längsachse 92 in gleichem Abstand zu dieser eine zweite Stellschraube 78 vorgesehen. Ähnlich wie bei der ersten Stellschraube 48 greift ein mit Außengewinde versehener Schaft der zweiten Stellschraube 78 in ein Gewindesackloch im Unterteil 2 ein und ersteckt sich durch eine Durchgangsbohrung des Oberteils. Der radial verbreiterte Kopf der zweiten Stellschraube 78 ist von einem sich auf einer inneren Ringschulter der Durchgangsbohrung abstützenden Hartmetallring untergriffen.

Der Bolzen 70 greift mit seinem Gewindeschaft 72 ebenfalls in ein Gewindesackloch 42 des Unterteils 2 ein. Der kopfnahe Abschnitt des Gewindeschaftes 72 erstreckt sich mit Spiel durch eine Durchgangsbohrung 54 im Oberteil 5, welche zur Oberseite hin radial so verbreitert ist, daß ein Tellerfederpaket 75 in der Verbreiterung Aufnahme finden kann. Der Kopf des Bolzens 70 ruht in einer breiten Ringmanschette 77, welche das Tellerfederpaket 75 nach außen abdeckt. Der sich durch die Durchgangsbohrung 54 erstreckende Abschnitt des Gewindeschaftes 72 ist von einer Metallhülse umgeben, sodaß sich das Tellerfederpaket 75 einerseits an der Hülse und andererseits an der Innenwand der Verbreiterung der Durchgangsbohrung 54 abstützt und dadurch dem Oberteil 5 eine Vorspannung relativ zum Unterteil 2 erteilt.

Somit kann der Ansatz 8 durch Drehen an der ersten Stellschraube 48 nach oben oder unten verstellt und durch Drehen an der zweiten Stellschraube 78 nach links oder rechts verkippt werden, jeweils relativ zum Unterteil 2.

Die Unterseite des Unterteils 2 ist mit Referenzelementen versehen, die im Zusammenwirken mit Referenzgegenelementen beispielsweise an der Stirnfläche eines nicht dargestellten Futters eine exakte Positionierung des Unterteils in einem orthogonalen x-y-z-Achsensystem (oder einem Polarkoordinatensystem) erlauben.

Als Beispiel für solche Referenzelemente sind hier kreuzweise angelegte Lippenpaare 25, 26, 27, 28 jeweils bestehend aus zwei gegenüberliegenden Lippen 22, 24 dargestellt, die für sich aus der Schrift EP-B-255 042 bekannt sind. Beim Anspannen des Unterteils 2 mit einem solchen Futter dringen aus dem Futter vorstehende Prismenzapfen zwischen die Lippen jedes Paares ein. Als weitere Referenzelemente weist die Unterseite des Unterteils an den vier Eckbereichen plan geschliffene Flächenabschnitte 17, 19, 21, 23 auf, die als z-Referenz dienen. Das Futter enthält eine Spannvorrichtung für einen ebenfalls nicht dargestellten Zugbolzen, der sich durch eine zentrale Durchgangsbohrung 53 des Oberteils 5, durch die Öffnung 95 in der Blattfeder 9 und durch eine zentrale Durchgangsöffnung 11 im Unterteil und anschließend in die Spannvorrichtung erstreckt.

Aus den eingangs genannten Gründen müssen Oberteil 5 und Unterteil 2 eine außerordentliche Festigkeit und Starrheit besitzen. Da bei einer der für die Nivelliervorrichtung 1 vorgesehenen Verwendungen sehr beengte Platzverhältnisse herrschen, ist die erstrebte Festigkeit und Starrheit dadurch erreicht, daß die Unterseite 50 des Oberteils 5 mit einer ersten massiven Balkenstruktur 60 und die Oberseite 20 des Unterteils 2 mit einer zweiten komplementären massiven Balkenstruktur 10 derart ausgerüstet sind, daß sich bei der Befestigung des Oberteils 5 am Unterteil 2 Balken der ersten Balkenstruktur 60 zwischen Balken der zweiten Balkenstruktur 10 befinden.

Im dargestellten Ausführungsbeispiel erkennt man aus Figur 6, daß die erste Balkenstruktur 60 aus zwei parallelen Seitenbalken 62, 64 und einem zu den Seitenbalken 62, 64 parallelen Mittelbalken 66 besteht, die endseitig durch einen hinteren Querbalken 61 und einen vorderen Querbalken 63 verbunden sind. Die Höhe jedes Balkens beträgt wenigstens ein Drittel seiner Breite. Die Seitenbalken 62 und 64 sowie der Mittelbalken 66 erstrecken sich quer zur Kante 55 in Richtung auf den Ansatz 8. Um die durch diese Balkenstruktur 60 gewonnene Starrheit und Festigkeit des Oberteils auf den Ansatz 9 zu übertragen sind zwei parallele Versteifungsriegel 68, 69 vorgesehen, die sich vom vorderen Ende des Zwischenraumes zwischen dem Mittelbalken 66 und jedem der Seitenbalken 62, 64 unter einem Winkel von ungefähr 45° in die Masse des Ansatzes 8 nach unten erstrecken.

Die zweite Rahmenstruktur 10 des Unterteils 2 umfaßt gemäß Figur 9 insgesamt vier parallele Balken 12, 14, 16, 18, die sich aus der Oberseite 20 des Unterteils 2 erheben. Die beiden gegenüberliegenden Seitenbalken 12 und 18 nehmen zwischen sich den unteren Abschnitt des Oberteils 5 auf, wie Figur 1 und 2 zeigen, und erstrecken sich über die ganze Länge des Unterteils 2. Die sich von vorne nach hinten erstreckenden Zwischenbalken 14 und 16 haben eine maximale Breite, die nur wenig kleiner ist als die beiden Zwischenräume zwischen den Seitenbalken 62, 64 und dem Mittelbalken 66 des Oberteils 5. Ferner ist ihre maximale Höhe über der Oberseite 20 des Unterteils 2 nur wenig kleiner als die Tiefe der genannten Zwischenräume. Beide Zwischenbalken 14 und 16 sind vorne mit einer Rampe 13 und 15 versehen, um Platz zu lassen für die Versteifungsriegel 68, 69. Ferner verjüngen sich beide Zwischenbalken 14 und 16 nach hinten und enden soweit vor der Hinterkante 29 des Unterteils 2, daß der Querschenkel 91 der Blattfeder 9 wie beschrieben auf der Oberseite des Unterteils 2 befestigt werden kann und keine Kollision mit dem Querbalken 61 eintreten kann. Der Längsschenkel 93 findet zwischen den Zwischenbalken 14 und 16 und ihren Verjüngungen Platz.

Wenn somit das Oberteil 5 auf dem Unterteil 2 wie beschrieben befestigt wird, fügen sich die Zwischenbalken 14 und 16 sowie die Seitenbalken 12 und 18 kammartig zwischen die Balken 62, 64, 66, 61 des Oberteils 5 ein.

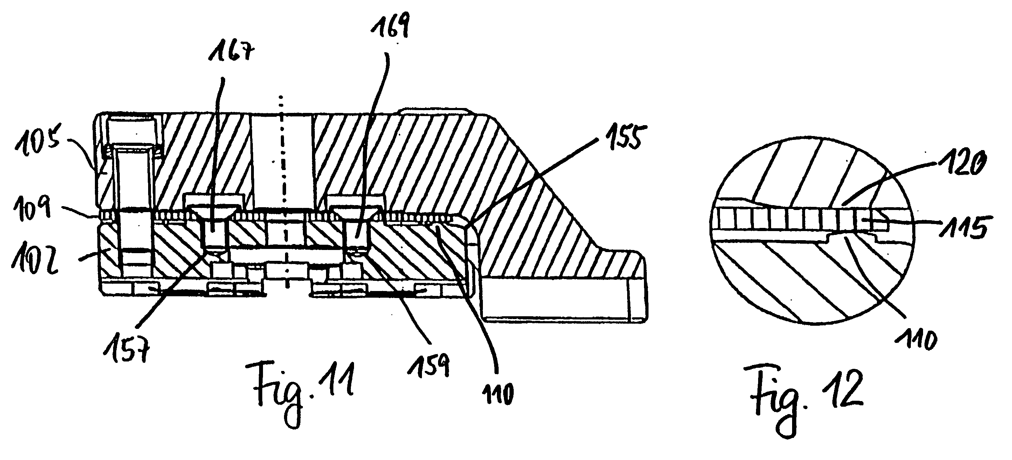

Die Ausführungsform der Erfindung gemäß Figuren 11 und 12 gleicht im wesentlichen der vorstehend beschriebenen. Die Nivelliervorrichtung besteht wieder aus einem Unterteil 102, einem Oberteil 105 und einer dazwischen gefügten Blattfeder 109. Abweichend sind anstelle der Gewindesacklöcher 57, 59 die mit Innengewinde versehenen Sacklöcher 157 und 159 in das Unterteil 102 eingebracht und fluchten mit den Löchern 97, 99 in der Blattfeder 109. Schrauben 167, 169 durchsetzen die Löcher 97, 99 und greifen in die Gewinde der Sacklöcher 157, 159 und legen die Blattfeder 109 damit auf dem Unterteil 102 fest. Die für die Erfindung wesentlichen Eigenschaften werden durch diese veränderte Befestigung der Blattfeder 109 jedoch nicht beeinflußt.

Aus den Figuren 11 und 12 ist andererseits deutlicher zu erkennen, durch welche Maßnahmen der Schwenkpunkt, um den das Oberteil durch Verdrehen der ersten Stellschraube 48 nach oben oder unten und durch Verdrehen der zweiten Stellschraube 78 nach links oder rechts verkippt werden kann, realisiert ist. In der Nähe der Vorderkante 155 des Unterteils 102 erhebt sich aus dessen Oberfläche eine erste Rippe 110 mit ungefähr halbzylindrischer Kontur, die sich im wesentlichen parallel zur Vorderkante 155 erstreckt. Über ihr liegt das kantenseitige Ende 115 der Blattfeder 109. Aus der Unterseite des Oberteils 105 steht gegenüber der ersten Rippe 110 eine zweite Rippe 120 mit ungefähr halbzylindrischer Kontur nach unten vor, die sich im wesentlichen quer zur Vorderkante 155 erstreckt und auf dem Ende 115 aufliegt. Der Schwenkpunkt liegt daher im Kreuzungsbereich der beiden Rippen 110 und 120, zwischen denen sich das Blattfederende 115 erstreckt.

Selbstverständlich liegt es im Rahmen der Erfindung, wenn die erste Rippe aus der Unterseite des Oberteils und die zweite Rippe aus der Oberseite des Unterteils vorstehen. Wichtig bleibt, dass die beiden Rippen, ob am Unterteil oder am Oberteil ausgebildet, quer zueinander angeordnet sind.

## Patentansprüche

1. Nivelliervorrichtung mit einem Unterteil (2) und einem relativ zum Unterteil einstellbaren und am Unterteil befestigten Oberteil (5), wobei das Unterteil mit Referenzelementen (25, 26, 27, 28; 17, 19, 21, 23) zur eindeutigen Positionierung und das Oberteil mit Mitteln (8) zum Befestigen eines Werkstückträgers für ein von einer Werkzeugmaschine, insbesondere einer Drahterosionsmaschine, zu bearbeitendes Werkstück versehen sind, **dadurch gekennzeichnet, daß** die Unterseite des Oberteils (5) eine erste Balkenstruktur (60) und die Oberseite des Unterteils (2) eine komplementäre zweite Balkenstruktur (10) derart aufweisen, daß sich Balken (62, 64, 66) der ersten Balkenstruktur (60) zwischen Balken (12, 14, 16, 18) der zweiten Balkenstruktur (10) erstrecken.

2. Vorrichtung nach Anspruch 1, **dadurch gekennzeichnet, daß** die Balken der ersten Balkenstruktur (60), zwischen die sich Balken der zweiten Balkenstruktur (10) erstrecken, geradlinig und parallel sind.

3. Vorrichtung nach Anspruch 1 oder 2, **dadurch gekennzeichnet, daß** die Balken der ersten Balkenstruktur, zwischen die sich Balken der zweiten Balkenstruktur erstrecken, in Richtung auf die Mittel (8) weisen.

4. Vorrichtung nach einem der vorstehenden Ansprüche, **dadurch gekennzeichnet, daß** die Höhe jedes Balkens der ersten Balkenstruktur (10) wenigstens ein Drittel seiner Breite beträgt.

5. Vorrichtung nach einem der vorstehenden Ansprüche, **dadurch gekennzeichnet, daß** die Balken der ersten Balkenstruktur (60), zwischen die sich Balken der zweiten Balkenstruktur (10) erstrecken, durch Querbalken (61, 63) verbunden sind.

6. Vorrichtung nach einem der vorstehenden Ansprüche, **dadurch gekennzeichnet, daß** die Mittel zum Befestigen eines Werkstückträgers einen an eine Kante (55) des Oberteils (5) angeformten Ansatz (8) aufweisen, und daß der Ansatz (8) durch Versteifungsriegel (68, 69) mit der Unterseite des Oberteils (5) verbunden ist.

7. Vorrichtung nach Anspruch 6, **dadurch gekennzeichnet, daß** sich die Versteifungsriegel (68, 69) in Zwischenräume zwischen Balken (62, 64, 66) der ersten Balkenstruktur (60) erstrecken.

8. Vorrichtung nach Anspruch 6 oder 7, **dadurch gekennzeichnet, daß** sich der Ansatz (8) neben das Unterteil (2) erstreckt und daß die Versteifungsriegel (68, 69) nach vorne und abwärts geneigt sind.

9. Vorrichtung nach einem der vorstehenden Ansprüche, **dadurch gekennzeichnet, daß** die Zwischenräume zwischen den Balken der ersten Balkenstruktur, zwischen die sich Balken der zweiten Balkenstruktur erstrecken, im wesentlichen die gleiche Breite wie die sie seitlich begrenzenden Balken haben.

10. Vorrichtung nach einem der vorstehenden Ansprüche, **dadurch gekennzeichnet, daß** die zweite Balkenstruktur (10) zwei gegenüberliegende Seitenbalken (12, 18) aufweist, die sich neben dem Oberteil (5) erstrecken.

11. Vorrichtung nach Anspruch 10, **dadurch gekennzeichnet, daß** sich die Seitenbalken (12, 18) quer zur Kante (55) des Oberteils (5) erstrecken.

12. Vorrichtung nach Anspruch 10 oder 11, **dadurch gekennzeichnet, daß** die Seitenbalken (12, 18) parallel sind.

13. Vorrichtung nach einem der Ansprüche 8 bis 11, **dadurch gekennzeichnet, daß** die zweite Balkenstruktur (10) Zwischenbalken (14, 16) aufweist, die in Anpassung an die Neigung der Versteifungsriegel (68, 69) vorne mit jeweils einer Rampe (13, 15) versehen sind.

14. Vorrichtung nach einem der vorstehenden Ansprüche, **dadurch gekennzeichnet, daß** eine erste Stellschraube (48) für eine Auf/Abverstellung des Oberteils (5) relativ zum Unterteil (2) von der Kante (55) am weitesten entfernt angeordnet ist und die Achse für die Auf/Abverstellung in der Nähe der und parallel zur Kante (55) liegt.

15. Vorrichtung nach Anspruch 14, **dadurch gekennzeichnet, daß** die Achse für die Auf/Abverstellung durch eine sich parallel zur Kante erstreckende Verbindungslinie eines Bolzens (70), der ein eine Vorspannung zwischen Oberteil (5) und Unterteil (2) erzeugendes Federpaket (75) aufweist, mit einer zweiten Stellschraube (78) für eine Kippverstellung des Oberteils (5) relativ zum Unterteil (2) definiert ist.

16. Vorrichtung nach einem der vorstehenden Ansprüche, **dadurch gekennzeichnet, daß** die Achse durch eine erste Rippe (110) realisiert ist, die sich aus der Oberseite des Unterteils (102) oder der Unterseite des Oberteils (105) in der Nähe dessen Vorderkante (155) erhebt und sich parallel zur Vorderkante (155) erstreckt.

17. Vorrichtung nach einem der vorstehenden Ansprüche, **dadurch gekennzeichnet, dass** für die Verschwenkung des Oberteils relativ zum Unterteil nach links oder rechts eine zweite Rippe (120) vorgesehen ist, die die aus der Unterseite des Oberteils (105) oder aus der Oberseite des Unterteils (102 vorsteht und sich quer zur Vorderkante (155) erstreckt.

18. Vorrichtung nach einem der vorstehenden Ansprüche, **dadurch gekennzeichnet, daß** Oberteil (5) mit dem Unterteil (2) über eine T-förmige Blattfeder (9) verbunden ist, wobei ein von der Kante (55) entfernter Querschenkel (91) der Blattfeder mit dem Unterteil und ein auf die Kante (55) zuweisender Längsschenkel (93) der Blattfeder an einem Mittelbalken (66) der ersten Balkenstruktur (60) befestigt sind.

19. Vorrichtung nach Anspruch 18, **dadurch gekennzeichnet, daß** sich das der Vorderkante (155) nahe Ende (115) der Blattfeder (109) zwischen die erste und die zweite Rippe erstreckt.

20. Vorrichtung nach einem der vorstehenden Ansprüche, **dadurch gekennzeichnet, dass** Freiflächen mit einer schwingungsdämmenden Masse beschichtet sind.

## Claims

1. Levelling device with a lower portion (2) and an upper portion (5) adjustable relative to the lower portion and attached to the lower portion, whereby the lower portion is provided with reference elements (25, 26, 27, 28, 17, 19, 21, 23) for unambiguous positioning and the upper portion is provided with means (8) for attaching a workpiece carrier for a workpiece to be processed by a machine tool, in particular a wire eroding machine, **characterised in that** the underside of the upper portion (5) has a first beam structure (60) and the upper side of the lower portion (2) has a complimentary second beam structure (10) such that beams (62, 64, 66) of the first beam structure (60) extend between beams (12, 14, 16, 18) of the second beam structure (10).

2. Device according to Claim 1, **characterised in that** the beams of the first beam structure (60) between which the beams of the second beam structure (10) extend are straight and parallel.

3. Device according to Claim 1 or 2, **characterised in that** the beams of the first beam structure between which the beams of the second beam structure extend face in the direction towards the means (8).

4. Device according to one of the previous claims, **characterised in that** the height of each beam of the first beam structure (10) is at least one third of its width.

5. Device according to one of the previous claims, **characterised in that** the beams of the first beam structure (60) between which the beams of the second beam structure (10) extend are linked by transverse beams (61, 63).

6. Device according to one of the previous claims, **characterised in that** means for fixing a workpiece carrier have a shoulder (8) formed on one edge (55) of the upper portion (5), and that the shoulder (8) is linked by stiffening struts (68, 69) to the underside of the upper portion (5).

7. Device according to Claim 6, **characterised in that** the stiffening struts (68, 69) extend into intermediate spaces between beams (62, 64, 66) of the first beam structure (60).

8. Device according to Claim 6 or 7, **characterised in that** the shoulder (8) extends adjacent to the lower portion (2) and that the stiffening struts (68, 69) are also inclined forwards and downwards.

9. Device according to one of the previous claims, **characterised in that** the intermediate spaces between the beams of the first beam structure between which beams of the second beam structure extend substantially have the same width as the beams laterally delimiting them.

10. Device according to one of the previous claims, **characterised in that** the second beam structure (10) has two mutually opposed side beams (12, 18), which extend beside the upper portion (5).

11. Device according to Claim 10, **characterised in that** the side beams (12, 18) extend transverse to the edge (55) of the upper portion (5).

12. Device according to Claim 10 or 11, **characterised in that** the side beams (12, 18) are parallel.

13. Device according to one of the claims 8 to 11, **characterised in that** the second beam structure (10) has intermediate beams (14, 16) which are each provided at the front with a ramp (13, 15) to adapt to the inclination of the stiffening struts (68, 69).

14. Device according to one of the previous claims, **characterised in that** a first adjusting screw (48) for an up/down adjustment of the upper portion (5) relative to the lower portion (2) is arranged as far as possible from the edge (55) and the axis for the up/down adjustment lies close to and parallel to the edge (55).

15. Device according to Claim 14, **characterised in that** the axis for the up/down adjustment is defined through a connecting line of a bolt (70) extending parallel to the edge, said bolt having a spring packet (75) generating a pretension between the upper portion (5) and the lower portion (2), with a second adjusting screw (78) for tilting adjustment of the upper portion (5) relative to the lower portion (2).

16. Device according to one of the previous claims, **characterised in that** the axis is realised by a first rib (110) which rises from the upper side of the lower portion (102) or the underside of the upper portion (105) close to its front edge (155) and extends parallel to the front edge (155).

17. Device according to one of the previous claims, **characterised in that** for the rotation of the upper portion relative to the lower portion to the left or the right, a second rib (120) is provided, which projects from the underside of the upper portion (105) or from the upper side of the lower portion (102) and extends transverse to the front edge (155).

18. Device according to one of the previous claims, **characterised in that** the upper portion (5) is connected to the lower portion (2) by a T-shaped leaf spring (9), whereby a transverse leg (91) of the leaf spring remote from the edge (55) is attached to the underside and a longitudinal leg (93) of the leaf spring facing towards the edge (55) is attached to a middle beam (66) of the first beam structure (60).

19. Device according to Claim 18, **characterised in that** the end (115) of the leaf spring (109) close to the front edge (155) extends between the first and second ribs.

20. Device according to one of the previous claims, **characterised in that** free areas are coated with a vibration-damping material.

## Revendications

1. Dispositif de nivellement comprenant une partie inférieure (2) et une partie supérieure (5) réglable par rapport à la partie inférieure et fixée sur la partie inférieure, la partie inférieure étant pourvue d'éléments de référence (25, 26, 27, 28, 17, 19, 21, 23) pour le positionnement bien défini et la partie supérieure de moyens (8) pour la fixation d'un porte-pièce pour une pièce à usiner par une machine-outil, en particulier une machine à érosion par fil, **caractérisé en ce que** le côté inférieur de la partie supérieure (5) présente une première structure de poutre (60) et le côté supérieur de la partie inférieure (2) une seconde structure de poutre (10) complémentaire de telle sorte que des poutres (62, 64, 66) de la première structure de poutre (60) s'étendent entre des poutres (12, 14, 16, 18) de la seconde structure de poutre (10).

2. Dispositif selon la revendication 1, **caractérisé en ce que** les poutres de la première structure de poutre (60), entre lesquelles des poutres de la seconde structure de poutre (10) s'étendent, sont rectilignes et parallèles.

3. Dispositif selon la revendication 1 ou 2, **caractérisé en ce que** les poutres de la première structure de poutre, entre lesquelles des poutres de la seconde structure de poutre s'étendent, sont dirigées vers les moyens (8).

4. Dispositif selon l'une quelconque des revendications précédentes, **caractérisé en ce que** la hauteur de chaque poutre de la première structure de poutre (10) correspond au moins à un tiers de sa largeur.

5. Dispositif selon l'une quelconque des revendications précédentes, **caractérisé en ce que** les poutres de la première structure de poutre (60), entre lesquelles s'étendent des poutres de la seconde structure de poutre (10), sont reliées par des poutres transversales (61, 63).

6. Dispositif selon l'une quelconque des revendications précédentes, **caractérisé en ce que** les moyens pour la fixation d'un porte-pièce présentent un appendice (8) créé par formage sur une arête (55) de la partie supérieure (5) et **en ce que** l'appendice (8) est relié par des verrous de raidissement (68, 69) au côté inférieur de la partie supérieure (5).

7. Dispositif selon la revendication 6, **caractérisé en ce que** les verrous de raidissement (68, 69) s'étendent dans des espaces intermédiaires entre des poutres (62, 64, 66) de la première structure de poutre (60).

8. Dispositif selon la revendication 6 ou 7, **caractérisé en ce que** l'appendice (8) s'étend à côté de la partie inférieure (2) et **en ce que** les verrous de raidissement (68, 69) sont inclinées vers l'avant et vers le bas.

9. Dispositif selon l'une quelconque des revendications précédentes, **caractérisé en ce que** les espaces intermédiaires entre les poutres de la première structure de poutre, entre lesquelles s'étendent des poutres de la seconde structure de poutre, ont sensiblement la même largeur que les poutres qui les délimitent sur le côté.

10. Dispositif selon l'une quelconque des revendications précédentes, **caractérisé en ce que** la seconde structure de poutre (10) présente deux poutres latérales (12, 18) opposées qui s'étendent à côté de la partie supérieure (5).

11. Dispositif selon la revendication 10, **caractérisé en ce que** les poutres latérales (12, 18) s'étendent transversalement à l'arête (55) de la partie supérieure (5).

12. Dispositif selon la revendication 10 ou 11, **caractérisé en ce que** les poutres latérales (12, 18) sont parallèles.

13. Dispositif selon l'une quelconque des revendications 8 à 11, **caractérisé en ce que** la seconde structure de poutre (10) présente des poutres intermédiaires (14, 16) qui sont pourvues à l'avant de respectivement une rampe (13, 15) par adaptation à l'inclinaison des verrous de raidissement (68, 69).

14. Dispositif selon l'une quelconque des revendications précédentes, **caractérisé en ce qu'**une première vis de réglage (48) pour un déplacement montant et descendant de la partie supérieure (5) par rapport à la partie inférieure (2) est disposée à la plus grande distance de l'arête (55) et l'axé pour le déplacement montant et descendant est disposé à proximité de l'arête et parallèlement à l'arête (55).

15. Dispositif selon la revendication 14, **caractérisé en ce que** l'axe pour le déplacement montant et descendant est défini par une ligne de liaison, s'étendant parallèlement à l'arête, d'un boulon (70), qui présente un groupe de ressorts (75) générant une précontrainte entre la partie supérieure (5) et la partie inférieure (2), avec une seconde vis de réglage (78) pour un déplacement de basculement de la partie supérieure (5) par rapport à la partie inférieure (2).

16. Dispositif selon l'une quelconque des revendications précédentes, **caractérisé en ce que** l'axe est réalisé par une première nervure (110) qui se soulève du côté supérieur de la partie inférieure (102) ou du côté inférieur de la partie supérieure (105) à proximité de son bord avant (155) et s'étend parallèlement à l'arête avant (155).

17. Dispositif selon l'une quelconque des revendications précédentes, **caractérisé en ce que**, pour le pivotement de la partie supérieure par rapport à la partie inférieure vers la gauche ou vers la droite, il est prévu une seconde nervure (120), qui déborde du côté inférieur de la partie supérieure (105) ou du côté supérieur de la partie inférieure (102) et s'étend transversalement à l'arête avant (155).

18. Dispositif selon l'une quelconque des revendications précédentes, **caractérisé en ce que** la partie supérieure (5) est reliée à la partie inférieure (2) au moyen d'un ressort à lames (9) en forme de T, une branche transversale (91), éloignée de l'arête (55), du ressort à lames avec la partie inférieure et une branche longitudinale (93), dirigée vers l'arête (55), du ressort à lames étant fixées sur une poutre centrale (66) de la première structure de poutre (60).

19. Dispositif selon la revendication 18, **caractérisé en ce que** l'extrémité (115), proche de l'arête avant (155), du ressort à lames (109) s'étend entre la première et la seconde nervures.

20. Dispositif selon l'une quelconque des revendications précédentes, **caractérisé en ce que** des surfaces libres sont revêtues avec une masse amortissant les vibrations.
